# EUROPEAN PATENT APPLICATION

(11) **EP 3 885 972 A1**
(43) Date of publication of application: **29.09.2021**
(21) Application number: 20165290.6
(22) Date of filing: 24.03.2020
(51) Int. Cl.: G06K 9/00, G06K 9/62

(54) **CONTEXT BASED PERCEPTION METHOD AND SYSTEM FOR MANAGING ENVIRONMENTAL SAFETY IN A COMPUTING ENVIRONMENT**

(71) Applicant: Siemens Aktiengesellschaft, 80333 München (DE)
(72) Inventor: GOPE, Sulagna, 700061 Kolkata, West Bengal (IN); RAVEENDRAN, Varsha, 560062 Bangalore, Karnataka (IN); SUDHAKARAN, Vinay, 560076 Bangalore, Karnataka (IN); YESHWANTH, Chandan, 560072 Bangalore, Karnataka (IN)
(74) Representative: Patentanwaltskanzlei WILHELM & BECK

(57) **Abstract**

The present invention relates a method and system for managing environmental safety in a computing environment (100). The method comprises obtaining one or more multimodal input raw data associated with one or more objects (108A-N). Further, the method comprises generating a three-dimensional environment model of the technical installation (106A-N) based on the obtained one or more multimodal input raw data associated with the one or more objects (108A-N). Also, the method comprises predicting one or more multimodal frames with respect to time interval based on the generated three-dimensional environment model. Also, the method comprises detecting one or more anomalies in the predicted one or more multimodal frames associated with the one or more objects (108A-N). Also, the method comprises generating a three-dimensional predicted environment model of the technical installation (106A-N) by superimposing the predicted one or more multimodal frames with the detected one or more anomalies. Further, the method comprises outputting the generated three-dimensional predicted environment model of the technical installation (106A-N) .

## Description

The present invention generally relates to the field of condition monitoring systems, and more particularly relates to a method and system for managing environmental safety in a computing environment.

In industrial environment, cameras are often used to control and monitor process plants using images captured by those cameras. These images are made accessible to operating personnel via their own monitors. The operators need to constantly watch and monitor one or more events captured in those frames. Events, such as accidents, may occur due to mechanical failure of a field device in a technical installation, a worker fatigue and any other errors. Before occurrence of such accidents, there may be one or more near misses, (such as narrowly averted accidents), or unsafe conditions for every near miss. However, only about one or two near misses are reported for every accident (fear of disciplinary action, volumes, etc.). Thus, localizing and investigating near misses is critical to prevent future accidents by implementing poka-yokes. Also, proper investigation and documentation of near misses improves risk management and better operation of the technical installation. Conventional safety systems have control centers where the monitoring is done by manually viewing video streams captured from cameras such as CCTVs, thermal cameras and wearables. However, such conventional safety systems have the following disadvantages.

Firstly, continuous manual viewing of video streams at the monitoring station can lead to fatigue, loss of attention (oversight) and most importantly human prone errors. Secondly, it is impossible to manually analyze trajectories of multiple moving objects in a dynamic scene of the technical installation to ascertain collision and prevent accidents. Lastly, the reasons for accidents occurring in a factory are numerous. For example, abandoned equipment, pallets not positioned correctly, BOPT (battery operated pallet truck) collisions, chemical leaks, PPEs (Personal protective equipment) not used by operators, explosion, fire, security violation, and the like. Monitoring is often done based on the video streams only and the audio component is completely ignored. Sound can act as an important source of information and may give clear indication of abnormal conditions in many scenarios.

Therefore, there is always a constant need for context-based perception method and system involving vision & sound for managing environmental safety in a computing environment.

Therefore, it is an object of the present invention to provide a context-based perception method and system for managing environmental safety in a computing environment.

The object of the present invention is achieved by a method for managing environmental safety in a computing environment. The method comprises obtaining one or more multimodal input raw data associated with one or more objects in a technical installation from one or more data sources. The one or more multimodal input raw data comprises one or more input multimodal frames. The one or more multimodal input raw data comprises sound data, video data, environmental data and object data. Each of the sound data and video data comprises data frames captured by corresponding sensing units. The one or more objects may be one or more static field equipment, human, and moving vehicles. The technical installation may be an industrial plant. The one or more data sources may be internal data sources such as cameras, image capturing units, sensors, and the like. Also, the one or more data sources may be external data sources such as external databases, cloud or any other remote servers.

Further, the method comprises generating a three-dimensional environment model of the technical installation based on the obtained one or more multimodal input raw data associated with the one or more objects in the technical installation. The three-dimensional environment model is a fusion of information from several modalities starting with the acquisition of data from several data sources, for example, private or public networks, industrial ethernet, sensing units worn on body of factory workers and also CCTV cameras. Other data sources are map of factory, location of static equipment, zones, maintenance schedule, etc. The information from these data sources are first synchronized with each other. Since the data sources are sampled at different frequencies, some data sources are interpolated, after which any missing information is filled in by observing all available data sources. Fusion is carried out both temporally and spatially. Temporal fusion accounts for missing information, whereas spatial fusion accounts for inconsistent views of the same object - for example due to occlusions present in video streams. This consensus process provides a clean data source on which further analysis can be performed. The information is stitched together to create a point cloud representation of the technical installation. The point cloud representation is then processed to generate three dimensional (3D) environmental model.

Further, the method comprises predicting one or more multimodal frames associated with the one or more objects in the technical installation with respect to time interval based on the generated three-dimensional environment model. The one or more multimodal frames are predicted for future time intervals.

Further, the method comprises detecting one or more anomalies in the predicted one or more multimodal frames associated with the one or more objects in the technical installation based on pre-stored machine learning model associated with the one or more objects in the technical installation. The one or more anomalies represent fault conditions or abnormal conditions associated with one or more multimodal frames. The method further comprises generating a three-dimensional predicted environment model of the technical installation by superimposing the predicted one or more multimodal frames with the detected one or more anomalies. Furthermore, the method comprises outputting the generated three-dimensional predicted environment model of the technical installation on a user interface.

In a preferred embodiment, in generating the three-dimensional environment model of the technical installation based on the obtained one or more multimodal input raw data associated with the one or more objects in the technical installation (106), the method comprises normalizing the one or more multimodal input raw data associated with the one or more objects in the technical installation based on predefined conditions. The normalized one or more multimodal input raw data comprises one or more types of multimodal data. The one or more predefined conditions comprises data integration checks, data validations, and the like. Further, the method comprises determining one or more types of multimodal data present in the normalized one or more multimodal input raw data. The one or more types of multimodal data comprises permanent static data, transient static data, transient dynamic data, highly dynamic data and the like. The permanent static data comprises map of a factory. The transient static data comprises status equipment data, restricted sign board information and the like. The transient dynamic data comprises unplanned maintenance, factory inspection data and the like.

The method further comprises merging the one or more types of multimodal data present in the normalized one or more multimodal input raw data using temporal and spatial parameters associated with the normalized one or more multimodal input raw data. The temporal parameters are values which indicates missing data, whereas spatial parameters are values which indicates inconsistent views of the same object - for example due to occlusions present in video streams.

Further, the method comprises generating the three-dimensional environment model of the technical installation based on the merged one or more types of multimodal data. The three-dimensional environment model comprises a point cloud representation of normalized one or more multimodal input raw data mapped to corresponding one or more types of multimodal data. The point cloud representation is a set of data points in space. Point clouds are a means of collating a large number of single spatial measurements into a dataset.

In another preferred embodiment, the method comprises determining whether the type of multimodal data is a sound data based on the obtained one or more multimodal input raw data associated with the one or more objects in the technical installation. Further, the method comprises generating a three-dimensional environment model for the sound data if the type of the multimodal data is a sound data. Also, the method comprises mapping the generated three-dimensional environment model for the sound data with the one or more objects in the technical installation. Furthermore, the method comprises merging the mapped three-dimensional environment model for the sound data with the generated three-dimensional environment model of the technical installation. Additionally, the method comprises generating a final three-dimensional environment model for the technical installation based on the merging. The final three-dimensional environment model comprises both the three-dimensional environment model for sound data and the three-dimensional environment model for the technical installation.

In yet another preferred embodiment, in predicting the one or more multimodal frames associated with the one or more objects in the technical installation with respect to time interval based on the generated three-dimensional environment model, the method comprises determining current location of one or more objects in the technical installation based on the generated three-dimensional environment model. Further, the method comprises generating current object trajectories between the one or more objects in the technical installation based on the determined current location of the one or more objects. The object trajectories depict path of motion of the one or more objects in the technical installation. Furthermore, the method comprises determining one or more multimodal properties associated with the one or more objects in the technical installation based on the generated current object trajectories. The one or more multimodal properties comprises timestamp information, multimodal data type, data size, and the like. Further, the method comprises computing possible locations of the one or more objects in the technical installation with respect to time interval based on the determined one or more multimodal properties associated with the one or more objects. Furthermore, the method comprises computing possible object trajectories between the one or more objects in the technical installation with respect to the time interval based on the predicted possible locations of the one or more objects in the technical installation. Additionally, the method comprises predicting the one or more multimodal frames associated with the one or more objects in the technical installation with respect to time interval based on the computed possible object trajectories.

In still another preferred embodiment, in detecting one or more anomalies in the predicted one or more multimodal frames associated with the one or more objects in the technical installation based on pre-stored machine learning model associated with the one or more objects in the technical installation, the method comprises classifying the predicted one or more multimodal frames into one or more segments based on predefined rules. The predefined rules comprises a check to determine worker not wearing the required safety equipment that is mandated in a zone, a check to determine worker is not complying to the standard operational procedures within a region, determine whether collision between BoPTs, check if there is any fire or chemical leak, check if any materials left in the gangway for a long period of time, check if the material is protruding out of the shelf in an unsafe way, check if workers in the area under surveillance are standing, sitting or lying on the floor. The one or more segments comprises normal and anomalous segments. The method further comprises comparing each of the one or more segments with corresponding one or more pre-stored segments. Also, the method comprises computing anomalous score for each of the one or more segments based on results of comparison. The anomalous score is computed using deep learning architectures. In an exemplary embodiment, first, rich and discriminative features of the input multimodal raw data are learnt via multi-layer nonlinear transformations. Unsupervised deep learning techniques such as for example, but not limited to, stacked denoising autoencoders are used for representation learning of appearance and motion features as well as their joint representation. Features learnt are given to a classification model, which classifies the sequence of frames as either anomalous or normal. Exemplary Algorithms such as one-class SVM may be used for outlier detection. In this algorithm, a hypersphere in the feature space is learnt and the normal sequences of the training data is mapped onto it. The outliers of the data distribution (anomalies) correspond to points lying outside the hypersphere. These algorithms are trained on real multimodal raw input data and made generic enough to recognize new kinds of safety conditions. Further, the method comprises detecting the one or more anomalies in each of the one or more segments corresponding to the predicted one or more multimodal frames based on the computed anomalous score.

In still another preferred embodiment, the method comprises performing a root cause analysis on the detected one or more anomalies in each of the one or more segments and outputting results of root cause analysis on the user interface. The results of root cause analysis comprise information on faults or abnormal conditions associated with the one or more objects in the technical installation.

In still another embodiment, in generating a three-dimensional predicted environment model of the technical installation by superimposing the predicted one or more multimodal frames with the detected one or more anomalies, the method comprises generating a visual representation of the predicted one or more multimodal frames. The visual representation may be an image or a video frame. Further, the method comprises integrating the detected one or more anomalies in the predicted one or more multimodal frames with the generated visual representation of the predicted one or more multimodal frames to generate integrated visual representation. Also, the method comprises retrieving one or more contextual visual indicators associated with the detected one or more anomalies. The one or more contextual visual indicators comprises symbols, color code, shapes indicating criticality of the one or more anomalies. Further, the method comprises superimposing the retrieved one or more contextual visual indicators with the integrated visual representation. Also, the method comprises generating a three-dimensional predicted environment model of the technical installation. The three-dimensional predicted environment model is a point cloud representation of technical installation comprising the predicted one or more multimodal frames integrated with the detected one or more anomalies and the one or more contextual visual indicators.

In yet another embodiment, in outputting the generated three-dimensional predicted environment model of the technical installation on the user interface, the method comprises displaying the generated three-dimensional predicted environment model of the technical installation on the user interface. Furthermore, in outputting the generated three-dimensional predicted environment model of the technical installation on the user interface, the method comprises generating one or more notification messages comprising the detected one or more anomalies. Further, the method comprises outputting the generated one or more notification messages on the user interface.

The object of the present invention is also be achieved by a computing system for managing environmental safety in a computing environment. The computing system may comprise one or more processors and a memory coupled to the one or more processors. The memory comprises an anomaly management module stored in the form of machine-readable instructions and executable by the one or more processors.

The anomaly management module is configured for performing the method described above.

The object of the invention can also be achieved by a computing environment comprising one or more user devices and one or more technical installation comprising one or more objects. Further, the computing environment comprises a computing system communicatively coupled to the one or more technical installation and the one or more user devices via a network.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a computing environment capable of managing environmental safety, according to an embodiment of the present invention;
- FIG 2: is a block diagram of a computing system such as those shown in FIG 1, depicting various components to implement embodiments of the present invention;
- FIG 3: is a block diagram of an anomaly management module, such as those shown in FIG 1 and 2, capable of managing environmental safety, according to the embodiment of the present invention;
- FIG 4: is a block diagram of a multi modal future frame prediction module such as those shown in FIG. 3, according to an embodiment of the present invention;
- FIG 5: is a detailed view of anomaly management module such as those shown in FIG. 3, according to an embodiment of the present invention; and
- FIG 6: is a process flowchart illustrating an exemplary method of managing environmental safety, according to the embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

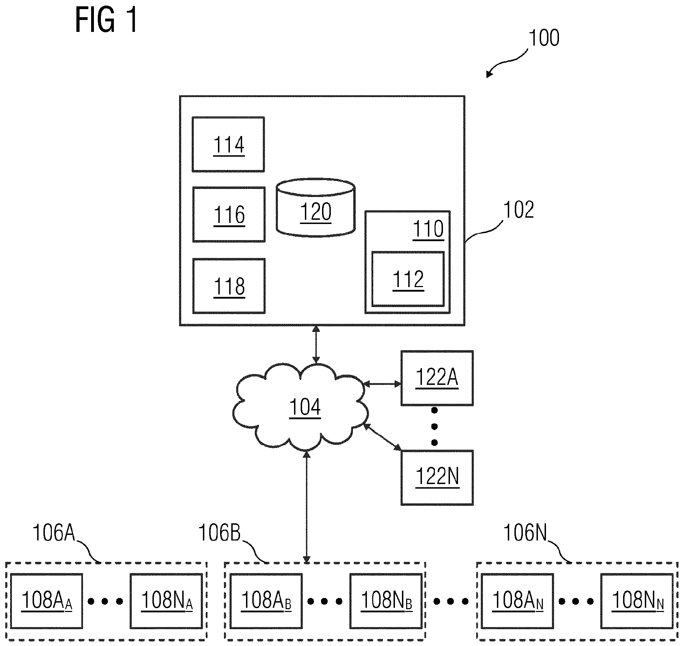

FIG 1 is a schematic representation of a computing environment 100 capable of managing environmental safety of a technical installation, according to an embodiment of the present invention. Particularly, FIG 1 depicts a computing system 102 which is capable of delivering remote applications for managing a technical installation 106A-N comprising one or more object(s) 108A-N. As used herein, "computing environment" refers to a processing environment comprising configurable computing physical and logical resources, for example, networks, servers, storage, applications, services, etc., and data distributed over the computing platform. The computing environment 100 provides on-demand network access to a shared pool of the configurable computing physical and logical resources.

The computing system 102 is connected to the technical installation 106A-N via a network 104 (e.g., industrial ethernet or Internet). The technical installation 106A-N comprises on one or more object(s) 108A-N. The one or more object(s) 108A-N may include servers, robots, industrial equipment(s), human, sensors, lighting system. The computing system 102 may be a public cloud, a private cloud, and/or a hybrid cloud or even an edge system configured to provide dedicated remote services to its users.

Further, the computing system 102 is also connected to user devices 122A-N via the network 104. The user devices 122A-N can access the computing system 102 for managing environmental safety of the technical installation 106A-N. The user devices 122A-N can be a laptop computer, desktop computer, tablet computer, smartphone and the like. The user devices 122A-N can access remote applications (such as enabling users to manage environmental safety) via a web browser.

The computing system 102 comprises a computing platform 110, a server 114 including hardware resources and an operating system (OS), a network interface 116, a database 120 and application program interfaces (APIs) 118. The network interface 116 enables communication between the computing system 102, the technical installation 106A-N, and the user device(s) 122A-N. The interface (not shown in FIG 1) may allow the engineers at the one or more user device(s) 122A-N to access multimodal data stored at the computing system 102 and perform one or more actions on the multimodal data as same instance. The server 114 may include one or more servers on which the OS is installed. The servers 114 may comprise one or more processors, one or more storage devices, such as, memory units, for storing data and machine-readable instructions for example, applications and application programming interfaces (APIs) 118, and other peripherals required for providing computing functionality. The computing platform 110 is a platform which enables functionalities such as data reception, data processing, data rendering, data communication, etc. using the hardware resources and the OS of the servers 114 and delivers the aforementioned remote services using the application programming interfaces 118 deployed therein. The computing platform 110 may comprise a combination of dedicated hardware and software built on top of the hardware and the OS.

The technical installation 106A-N comprises one or more sensing units (not shown). The one or more sensing unit may be sensors embedded at multiple positions on the objects 108A-N. The one or more sensing unit is configured for capturing real-time multimodal input raw data and object data associated with the one or more object(s) 108A-N. The real time multimodal raw input data comprises sound data, video data, environmental data and object data and wherein each of the sound data and video data comprises data frames captured by corresponding sensing units. The object data comprises scene information, sound information of an equipment, and the like. As used herein the communication network 104, refers to, for example, any wired or wireless network such as the internet, an intranet, that implements Bluetooth® of Bluetooth Sig, Inc., a network that implements Wi-Fi® of Wi-Fi Alliance Corporation, an ultra-wideband communication network (UWB), a wireless universal serial bus (USB) communication network, a communication network that implements ZigBee® of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a long-term evolution (LTE) mobile communication network, a public telephone network, etc., a local area network, a wide area network, an internet connection network, an infrared communication network, etc., or a network formed from any combination of these networks.

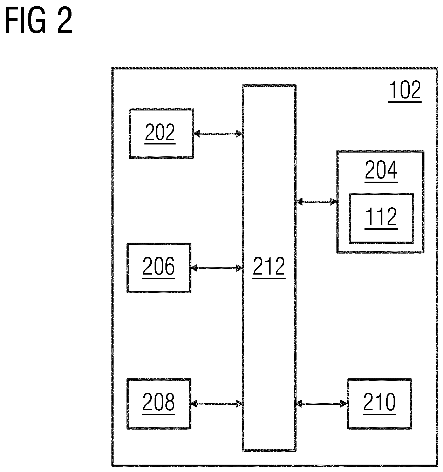

The computing platform 110 comprises an anomaly management module 112. A detailed view of various components of the computing system 102 is shown in FIG 2. The computing system 102 may be a standalone system, edge system or a system on a cloud. In a preferred embodiment, the computing system 102 is a cloud based system capable of managing environmental safety.

The database 120 stores the information relating to the technical installation 106A-N and the user device(s) 122A-N. The database 120 is, for example, a structured query language (SQL) data store or a not only SQL (NoSQL) data store. The database 120 is configured as cloud-based database implemented in the computing environment 100, where computing resources are delivered as a service over the computing platform 110. The database 120, according to another embodiment of the present invention, is a location on a file system directly accessible by the computing platform 110. The database 120 is configured to store multimodal data and other artifacts pertaining to the output of the model.

In order to access the remote applications, one or more multimodal data are required to be deployed on a computing platform, which are then accessed by personnel on user device 122A-N to avail the remote applications.

The computing system 102 may comprise a plurality of servers or processors (also known as 'cloud infrastructure'), which are geographical distributed, connected with each other via the network 104. A dedicated platform (hereinafter referred to as 'computing platform') is installed on the servers/processors for providing above functionality as an application (hereinafter referred to as remote application'). The computing platform 110 may comprise a plurality of software programs executed on one or more servers or processors of the computing system 102 to enable delivery of the requested applications to the devices and its users.

FIG 2 is a block diagram of a computing system 102 such as those shown in FIG 1, depicting various components to implement embodiments of the present invention. In FIG 2, the computing system 102 includes a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor (s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an anomaly management module 112 stored in the form of machine-readable instructions on any of the above-mentioned storage media and may be in communication with and executed by the processor(s) 202.

When executed by the processor(s) 202, the anomaly management module 112 causes the processor(s) 202 to manage the environmental safety of object(s) 108A-N in the technical installation 106A-N. The anomaly management module 112 causes the processor(s) 202 to obtain one or more multimodal input raw data associated with one or more objects 108A-N in a technical installation 106A-N from one or more data sources. The one or more multimodal input raw data comprises one or more input multimodal frames. The one or more multimodal input raw data comprises sound data, video data, environmental data and object data. Each of the sound data and video data comprises data frames captured by corresponding sensing units. The one or more multimodal data may be video data, sound data and the like. The one or more objects 108A-N may be one or more field equipment, human, and the like. The technical installation 106A-N may be an industrial plant. The one or more data sources may be internal data sources such as cameras, image capturing units, sensors, and the like. Also, the one or more data sources may be external data sources such as external databases, cloud or any other remote servers.

Further, the anomaly management module 112 causes the processor(s) 202 to generate a three-dimensional environment model of the technical installation 106A-N based on the obtained one or more multimodal input raw data associated with the one or more objects 108A-N in the technical installation 106A-N. The three-dimensional environment model is a fusion of information from several modalities starting with the acquisition of data from several data sources, for example, private or public networks, industrial ethernet, sensing units worn on body of factory workers and also CCTV cameras. Other data sources are map of factory, location of static equipment, zones, maintenance schedule, etc. The information from these data sources are first synchronized with each other. Since the data sources are sampled at different frequencies, some data sources are interpolated, after which any missing information is filled in by observing all available data sources. Fusion is carried out both temporally and spatially. Temporal fusion accounts for missing information, whereas spatial fusion accounts for inconsistent views of the same object - for example due to occlusions present in video streams. This consensus process provides a clean data source on which further analysis can be performed. The information is stitched together to create a point cloud representation of the technical installation. The point cloud representation is then processed to generate three dimensional (3D) environmental model. Further, the anomaly management module 112 causes the processor(s) 202 to predict one or more multimodal frames associated with the one or more objects 108A-N in the technical installation 106A-N with respect to time interval based on the generated three-dimensional environment model. The one or more multimodal frames are predicted for future time intervals.

Further, the anomaly management module 112 causes the processor(s) 202 to detect one or more anomalies in the predicted one or more multimodal frames associated with the one or more objects 108A-N in the technical installation 106A-N based on pre-stored machine learning model associated with the one or more objects 108A-N in the technical installation 106A-N. The one or more anomalies represent fault conditions or abnormal conditions associated with one or more multimodal frames. The anomaly management module 112 causes the processor(s) 202 to generate a three-dimensional predicted environment model of the technical installation 106A-N by superimposing the predicted one or more multimodal frames with the detected one or more anomalies. Furthermore, the anomaly management module 112 causes the processor(s) 202 to output the generated three-dimensional predicted environment model of the technical installation 106A-N on a user interface.

In generating the three-dimensional environment model of the technical installation 106A-N based on the obtained one or more multimodal input raw data associated with the one or more objects 108A-N in the technical installation 106A-N, the anomaly management module 112 causes the processor(s) 202 to normalize the one or more multimodal input raw data associated with the one or more objects 108A-N in the technical installation 106A-N based on predefined conditions. The normalized one or more multimodal input raw data comprises one or more types of multimodal data. The one or more predefined conditions comprises data integration checks, data validations, and the like. Further, the anomaly management module 112 causes the processor (s) 202 to determine one or more types of multimodal data present in the normalized one or more multimodal input raw data. The one or more types of multimodal data comprises permanent static data, transient static data, transient dynamic data, highly dynamic data and the like. The permanent static data comprises map of a factory. The transient static data comprises status equipment data, restricted sign board information and the like. The transient dynamic data comprises unplanned maintenance, factory inspection data and the like.

The anomaly management module 112 causes the processor(s) 202 to merge the one or more types of multimodal data present in the normalized one or more multimodal input raw data using temporal and spatial parameters associated with the normalized one or more multimodal input raw data. The temporal are values which indicates missing data, whereas spatial parameters are values which indicates inconsistent views of the same object - for example due to occlusions present in video streams.
Further, the anomaly management module 112 causes the processor(s) 202 to generate the three-dimensional environment model of the technical installation 106A-N based on the merged one or more types of multimodal data. The three-dimensional environment model comprises a point cloud representation of normalized one or more multimodal input raw data mapped to corresponding one or more types of multimodal data. The point cloud representation is a set of data points in space. Point clouds are a means of collating a large number of single spatial measurements into a dataset.

In another preferred embodiment, the anomaly management module 112 causes the processor(s) 202 to determine whether the type of multimodal data is a sound data based on the obtained one or more multimodal input raw data associated with the one or more objects 108A-N in the technical installation 106A-N. Further, the anomaly management module 112 causes the processor(s) 202 to generate a three-dimensional environment model for the sound data if the type of the multimodal data is a sound data. Also, the anomaly management module 112 causes the processor(s) 202 to map the generated three-dimensional environment model for the sound data with the one or more objects 108A-N in the technical installation 106A-N. Furthermore, the anomaly management module 112 causes the processor(s) 202 to merge the mapped three-dimensional environment model for the sound data with the generated three-dimensional environment model of the technical installation 106A-N. Additionally, the anomaly management module 112 causes the processor(s) 202 to generate a final three-dimensional environment model for the technical installation 106A-N based on the merging. The final three-dimensional environment model comprises both the three-dimensional environment model for sound data and the three-dimensional environment model for the technical installation 106AN.

In predicting the one or more multimodal frames associated with the one or more objects 108A-N in the technical installation 106AN with respect to time interval based on the generated three-dimensional environment model, the anomaly management module 112 causes the processor(s) 202 to determine current location of one or more objects 108A-N in the technical installation 106A-N based on the generated three-dimensional environment model. Further, the anomaly management module 112 causes the processor(s) 202 to generate current object trajectories between the one or more objects 108A-N in the technical installation 106A-N based on the determined current location of the one or more objects 108A-N. The object trajectories depict path of motion of the one or more objects 108A-N in the technical installation 106A-N. Furthermore, the anomaly management module 112 causes the processor(s) 202 to determine one or more multimodal properties associated with the one or more objects 108A-N in the technical installation 106A-N based on the generated current object trajectories. The one or more multimodal properties comprises time stamp information, multimodal data type, data size, and the like. Further, the anomaly management module 112 causes the processor(s) 202 to compute possible locations of the one or more objects 108A-N in the technical installation 106A-N with respect to time interval based on the determined one or more multimodal properties associated with the one or more objects 108A-N. Furthermore, the anomaly management module 112 causes the processor(s) 202 to compute possible object trajectories between the one or more objects 108AN in the technical installation 106A-N with respect to the time interval based on the predicted possible locations of the one or more objects 108A-N in the technical installation 106A-N. Additionally, the anomaly management module 112 causes the processor (s) 202 to predict the one or more multimodal frames associated with the one or more objects 108A-N in the technical installation 106A-N with respect to time interval based on the computed possible object trajectories.

In detecting one or more anomalies in the predicted one or more multimodal frames associated with the one or more objects 108A-N in the technical installation 106A-N based on pre-stored machine learning model associated with the one or more objects 108A-N in the technical installation 106A-N, the anomaly management module 112 causes the processor(s) 202 to classify the predicted one or more multimodal frames into one or more segments based predefined rules. The predefined rules comprises a check to determine worker not wearing the required safety equipment that is mandated in a zone, a check to determine worker is not complying to the standard operational procedures within a region, determine whether collision between BoPTs, check if there is any fire or chemical leak, check if any materials left in the gangway for a long period of time, check if material protruding out of the shelf in an unsafe way, check if workers in the area under surveillance are standing, sitting or lying on the floor. The one or more segments comprises normal and anomalous segments. The anomaly management module 112 further causes the processor(s) 202 to compare each of the one or more segments with corresponding one or more pre-stored segments. Also, the anomaly management module 112 causes the processor(s) 202 to compute anomalous score for each of the one or more segments based on results of comparison. The anomalous score is computed using deep learning architectures. In an exemplary embodiment, first, rich and discriminative features of the input multimodal raw data are learnt via multi-layer nonlinear transformations. Unsupervised deep learning techniques such as for example, but not limited to, stacked denoising autoencoders are used for representation learning of appearance and motion features as well as their joint representation. Features learnt are given to a classification model, which classifies the sequence of frames as either anomalous or normal. Exemplary Algorithms such as one-class SVM may be used for outlier detection. In this algorithm, a hypersphere in the feature space is learnt and the normal sequences of the training data is mapped into it. The outliers of the data distribution (anomalies) correspond to points lying outside the hypersphere. These algorithms are trained on real multimodal raw input data and made generic enough to recognize new kinds of safety conditions. Further, the anomaly management module 112 causes the processor (s) 202 to detect the one or more anomalies in each of the one or more segments corresponding to the predicted one or more multimodal frames based on the computed anomalous score.

The anomaly management module 112 further causes the processor(s) 202 to perform a root cause analysis on the detected one or more anomalies in each of the one or more segments and outputting results of root cause analysis on the user interface. The results of root cause analysis comprises of information on faults or abnormal conditions associated with the one or more objects 108AN in the technical installation 106A-N.

In generating a three-dimensional predicted environment model of the technical installation 106A-N by superimposing the predicted one or more multimodal frames with the detected one or more anomalies, the anomaly management module 112 causes the processor(s) 202 to generate a visual representation of the predicted one or more multimodal frames. The visual representation may be an image or a video frame. Further, the anomaly management module 112 causes the processor(s) 202 to integrate the detected one or more anomalies in the predicted one or more multimodal frames with the generated visual representation of the predicted one or more multimodal frames to generate integrated visual representation. Also, the anomaly management module 112 causes the processor(s) 202 to retrieve one or more contextual visual indicators associated with the detected one or more anomalies. The one or more contextual visual indicators comprises symbols, color code, shapes indicating criticality of the one or more anomalies. Further, the anomaly management module 112 causes the processor(s) 202 to superimpose the retrieved one or more contextual visual indicators with the integrated visual representation. Also, the anomaly management module 112 causes the processor(s) 202 to generate a three-dimensional predicted environment model of the technical installation 106A-N. The three-dimensional predicted environment model is a point cloud representation of technical installation 106A-N comprising the predicted one or more multimodal frames integrated with the detected one or more anomalies and the one or more contextual visual indicators.

In outputting the generated three-dimensional predicted environment model of the technical installation 106A-N on the user interface, the anomaly management module 112 causes the processor(s) 202 to display the generated three-dimensional predicted environment model of the technical installation 106A-N on the user interface. Furthermore, in outputting the generated three-dimensional predicted environment model of the technical installation 106A-N on the user interface, the anomaly management module 112 causes the processor (s) 202 to generate one or more notification messages comprising the detected one or more anomalies. Further, the anomaly management module 112 causes the processor(s) 202 to output the generated one or more notification messages on the user interface.

The communication interface 206 is configured for establishing communication sessions between the one or more user device 122AN, the one or more objects 108A-N, and the computing system 102. In an embodiment, the communication interface 206 interacts with the interface at the user devices 122A-N for allowing the users to access the multi-modal data and perform one or more actions on the multi-modal. The network interface 208 helps in managing network communications between the one or more objects 108A-N, and the user devices 122A-N.

The input-output unit 210 may include input devices a keypad, touch-sensitive display, camera (such as a camera receiving gesture-based inputs), etc. capable of receiving one or more input signals, such as user commands to process equipment data. Also, the input-output unit 210 may be a display unit for displaying a graphical user interface which visualizes the multimodal data and also displays the status information associated with each set of actions performed on the multimodal data. The set of actions may include data entry, data modification or data display. The bus 212 acts as interconnect between the processor 202, the memory 204, and the input-output unit 210.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

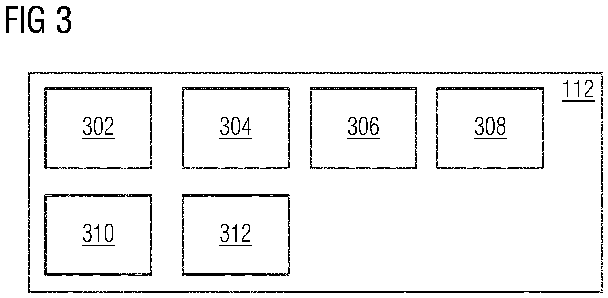

FIG 3 is a block diagram of an anomaly management module 112, such as those shown in FIG 1 and 2, capable of managing environmental safety, according to the embodiment of the present invention. In FIG. 3, the anomaly management module 112 comprises a data preprocessing module 302, a three dimensional environment model generation module 304, a multimodal frame prediction module 306, an anomaly detection module 308, a database 310 and a data visualizer module 312.

The data preprocessing module 302 is configured for obtaining one or more multimodal input raw data associated with one or more objects 108A-N in a technical installation 106A-N from one or more data sources. The one or more multimodal input raw data comprises one or more input multimodal frames. The one or more multimodal input raw data comprises sound data, video data, environmental data and object data and each of the sound data and video data comprises data frames captured by corresponding sensing units. The data preprocessing module 302 is configured for performing preprocessing on the obtained one or more multimodal input raw data. The one or more data sources may be for example, CCTV cameras and Lidar and depth cameras.

The three-dimensional environment model generation module 304 is configured for generating a three-dimensional environment model of the technical installation 106A-N based on the obtained one or more multimodal input raw data associated with the one or more objects 108A-N in the technical installation 106A-N. A dynamic three-dimensional environment model of the technical installation 106A-N is built using sensor fusion and computer vision techniques giving a holistic view of the technical installation 106A-N. The objects 108A-N in the technical installation 106A-N such as the plant workers, machines, cranes, battery operated pallet trucks (BOPTs) and other moving entities are tracked in the three dimensional environment model, which is a map view. Sensor fusion techniques are used to combine data from multiple sources to perceive the technical installation 106A-N with more precision as compared to using each individual sensor separately. Sensor fusion starts with acquisition of multimodal data from several devices, such as these maybe on the ground, worn on the body of plant workers and CCTV cameras. Other data sources (are map of the technical installation 106A-N, location of static equipment, zones, maintenance schedule, etc) are also considered while processing the multimodal data. The multimodal raw data from these sources are first preprocessed. Since the sources are sampled at different frequencies, some sources are interpolated, after which any missing data is filled in by observing all available sources. Fusion is carried out both temporally and spatially. Temporal fusion identifies missing data, whereas spatial fusion identifies inconsistent views of the same object, 108A-N - for example due to occlusions present in video streams. This consensus process provides a clean data source on which further analysis is performed. Such preprocessed multimodal data is merged together to create a point cloud of the technical installation 106A-N. The point cloud is then processed to create three dimensional semantic maps and information for localizing various entities in the map.

Specifically, the three dimensional environment model generation module 304 is configured for normalizing the one or more multimodal input raw data associated with the one or more objects 108A-N in the technical installation 106A-N based on predefined conditions. The predefined conditions comprises of data integration checks, data validations, and the like. The normalized one or more multimodal input raw data comprises one or more types of multimodal data. The one or more types of multimodal data comprises video data, image data or sound data. The normalization may be achieved using any standard known technique. Further, the three dimensional environment model generation module 304 is configured for determining one or more types of multimodal data present in the normalized one or more multimodal input raw data. Also, the three dimensional environment model generation module 304 is configured for merging the one or more types of multimodal data present in the normalized one or more multimodal input raw data using temporal and spatial parameters associated with the normalized one or more multimodal input raw data.

The three-dimensional environment model generation module 304 is configured for generating the three-dimensional environment model of the technical installation 106A-N based on the merged one or more types of multimodal data. The three-dimensional environment model comprises a point cloud representation of normalized one or more multimodal input raw data mapped to corresponding one or more types of multimodal data.

Additionally, the three-dimensional environment model generation module 304 is configured for generating a three-dimensional predicted environment model of the technical installation 106A-N by superimposing the predicted one or more multimodal frames with the detected one or more anomalies. Specifically, the three-dimensional environment model generation module 304 is configured for generating a visual representation of the predicted one or more multimodal frames. The three-dimensional environment model generation module 304 is configured for integrating the detected one or more anomalies in the predicted one or more multimodal frames with the generated visual representation of the predicted one or more multimodal frames to generate integrated visual representation. The three-dimensional environment model generation module 304 is configured for retrieving one or more contextual visual indicators associated with the detected one or more anomalies. The one or more contextual visual indicators comprises symbols, color code, shapes indicating criticality of the one or more anomalies. The three-dimensional environment model generation module 304 is configured for superimposing the retrieved one or more contextual visual indicators with the integrated visual representation. The three-dimensional environment model generation module 304 is configured for generating a three-dimensional predicted environment model of the technical installation 106A-N. The three-dimensional predicted environment model is a point cloud representation of technical installation 106A-N comprising the predicted one or more multimodal frames integrated with the detected one or more anomalies and the one or more contextual visual indicators.

Furthermore, the three-dimensional environment model generation module 304 is configured for determining whether the type of multimodal data is a sound data based on the obtained one or more multimodal input raw data associated with the one or more objects 108A-N in the technical installation 106A-N. The three-dimensional environment model generation module 304 is configured for generating a three-dimensional environment model for the sound data if the type of the multimodal data is a sound data. Further, the three-dimensional environment model generation module 304 is configured for mapping the generated three-dimensional environment model for the sound data with the one or more objects 108A-N in the technical installation 106A-N. The three-dimensional environment model generation module 304 is configured for merging the mapped three-dimensional environment model for the sound data with the generated three-dimensional environment model of the technical installation 106A-N. The three-dimensional environment model generation module 304 is configured for generating a final three-dimensional environment model for the technical installation 106A-N based on the merging. The final three-dimensional environment model comprises both the three-dimensional environment model for sound data and the three-dimensional environment model for the technical installation 106A-N.

The multimodal frame prediction module 306 is configured for predicting one or more multimodal frames associated with the one or more objects 108A-N in the technical installation 106A-N with respect to time interval based on the generated three-dimensional environment model. The multimodal frame prediction module 306 is configured for determining current location of one or more objects 108A-N in the technical installation 106A-N based on the generated three-dimensional environment model. The multimodal frame prediction module 306 is configured for generating current object trajectories between the one or more objects 108A-N in the technical installation 106A-N based on the determined current location of the one or more objects 108A-N. The object trajectories are motion paths of an object from one position to another. The multimodal frame prediction module 306 is configured for determining one or more multimodal properties associated with the one or more objects 108A-N in the technical installation 106A-N based on the generated current object trajectories. The multimodal frame prediction module 306 is configured for computing possible locations of the one or more objects 108A-N in the technical installation 106A-N with respect to time interval based on the determined one or more multimodal properties associated with the one or more objects 108A-N. The multimodal frame prediction module 306 is configured for computing possible object trajectories between the one or more objects 108A-N in the technical installation 106A-N with respect to the time interval based on the predicted possible locations of the one or more objects 108A-N in the technical installation 106A-N. The multimodal frame prediction module 306 is configured for predicting the one or more multimodal frames associated with the one or more objects 108A-N in the technical installation 106A-N with respect to time interval based on the computed possible object trajectories.

The anomaly detection module 308 is configured for detecting one or more anomalies in the predicted one or more multimodal frames associated with the one or more objects 108A-N in the technical installation 106A-N based on pre-stored machine learning model associated with the one or more objects 108A-N in the technical installation 106A-N. The one or more anomalies may be for example, workers in a factory not wearing the required safety equipment that is mandated in a zone, worker is not complying to the standard operational procedures within a region, collision between BoPTs, fire, chemical leak, materials left in the gangway for a long period of time, material protruding out of the shelf in an unsafe way, workers in the area under surveillance are standing, sitting or lying on the floor, fatigue risk assessment, etc. The anomaly detection module 308 identifies both known and unknown anomalies. Factory simulators may be used to train models for hazardous and non-compliant situations for which normal/anomalous data is not easily available. These simulators are used to generate annotated videos with different viewpoints, lighting conditions, and variants of the same anomaly.

The anomaly detection module 308 uses methods which requires annotations only at the video level (video is labelled as normal, anomalous), instead of temporal annotations (start and end of each anomaly are labelled) which are time-consuming. Due to the deceptive nature of anomalies it is difficult to label and annotate all the possible anomalies that can occur in a factory. This makes it difficult to configure anomaly detection module 308 to detect every kind of anomaly. Hence, unsupervised algorithms are used for this purpose. These algorithms operate in two phases namely, learn the normal patterns in the technical installation 106A-N by training on multimodal data without anomalies and the other is to detect anomalies in new multimodal data.

Using deep architectures, rich and discriminative features are learnt via multi-layer nonlinear transformations. Unsupervised deep learning techniques such as stacked denoising autoencoders are used for representation learning of appearance and motion features as well as their joint representation.

Features learnt from video are given to a classification model, which classifies the sequence of frames as either anomalous or normal. Specifically, the anomaly detection module 308 is configured for classifying the predicted one or more multimodal frames into one or more segments based predefined rules. Algorithms such as one-class SVM are used for outlier detection. In this algorithm, a hypersphere in the feature space is learnt and the normal sequences of the training data are mapped into it. The outliers of the data distribution (anomalies) correspond to points lying outside the hypersphere. These algorithms are trained on real time multimodal data and made are adaptable enough to recognize new kinds of safety conditions. The anomaly detection module 308 is configured for comparing each of the one or more segments with corresponding one or more pre-stored segments. The one or more segments comprises abnormal or normal segments. The anomaly detection module 308 is configured for computing anomalous score for each of the one or more segments based on results of comparison. The anomalous score is a value indicating whether the segment has an anomaly or is normal and is computed using deep learning architectures. The anomaly detection module 308 is configured for detecting the one or more anomalies in each of the one or more segments corresponding to the predicted one or more multimodal frames based on the computed anomalous score.

In an embodiment, when the type of multimodal data is sound data, then the anomaly detection module 308 is configured for detecting anomalies even in such audio data. The audio features are obtained by training a deep neural network based on alignment between temporal audio and visual frames. This is a completely unsupervised training methodology. The audio features thus obtained are used to classify the source of origin of sound. These features are also used to create a sound map. Once a sound map is obtained for the technical installation 106A-N, anomalous events can be detected in an unsupervised manner. It is also important to ensure that the anomaly is compliant with visual signals. This problem is handled in two ways. One way is to detect anomalies separately for video and audio and then to use a weighted inference mechanism to detect anomalous behavior. The other approach is to use an audio-guided visual attention model to identify and localize the anomalous event. It is important to use both the approaches based the requirements. For example, in places where the video is not available, or the video is available but there is apparently no visual anomaly (some internal machine part which is not visible from outside has encountered some defect and is producing abnormal sound).

Further, the anomaly detection module 308 is configured for performing a root cause analysis on the detected one or more anomalies in each of the one or more segments. This can be achieved using historic incident data. The anomaly detection module 308 is configured for outputting results of root cause analysis on the user interface. The results of root cause analysis comprises of information on faults or abnormal conditions associated with the one or more objects 108A-N in the technical installation 106A-N.

The database 310 is configured for storing the multimodal raw input data, three dimensional environment model, three dimensional predicted environment model, predefined conditions, predefined rules, one or more segments, one or more multimodal data type, notification messages, object trajectories, current and possible positions and the like.

The data visualizer module 312 is configured for outputting the generated three-dimensional predicted environment model of the technical installation 106A-N on a user interface. Specifically, the data visualizer module 312 is configured for displaying the generated three-dimensional predicted environment model of the technical installation 106A-N on the user interface. Further, the data visualizer module 312 is configured for generating one or more notification messages comprising the detected one or more anomalies, Later, the data visualizer module 312 is configured for outputting the generated one or more notification messages on the user interface. All insights obtained from multimodal data are visualized and provided on a monitoring console. Alarms and triggers are provided that are immediately executed, so that feedback is faster than a human response whenever possible (implementation of poka-yoke). For example, a siren can be activated, the machine involved in the unsafe condition shut off, or its operating parameters changed. This system may also be deployed in a "dark factory" where there are no workers to ensure the integrity of the factory itself. A human in the loop allows for active learning of the system especially in case of false positives and low confidence scores.

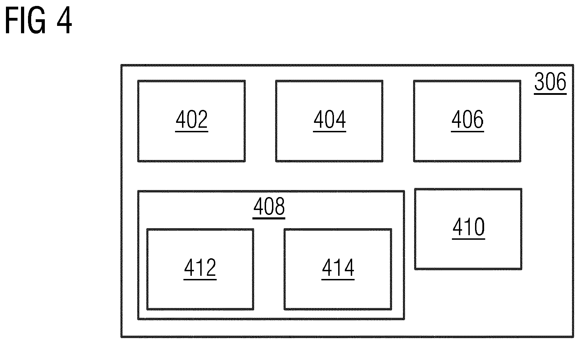

FIG 4 is a block diagram of a multi modal future frame prediction module 306 such as those shown in FIG. 3, according to an embodiment of the present invention. In FIG. 4, the multi modal future frame prediction module 306 comprises object detection and tracking module 402, a segmentation module 404, a trajectory prediction module 406, a future frame prediction module 408, and a sound map generation module 410.

The object detection and tracking module 402 is configured for determining current location of one or more objects 108A-N in the technical installation 106A-N based on the generated three-dimensional environment model. The camera images are taken as input and locations of objects 108A-N in the image are outputted. Algorithms such as VoxelNet and PIXOR may be used in three dimensional environments and RetinaNet may be used for two dimensional. The object detection and tracking module 402 is configured for generating current object trajectories between the one or more objects 108A-N in the technical installation 106A-N based on the determined current location of the one or more objects 108A-N. Algorithms are used to consider object locations in the current image as input and associate them across frames to generate current object trajectories. Techniques such as V-IOU tracker, MDPNN tracker, Deep SORT can be used.

The object detection and tracking module 402 is also configured for determining one or more multimodal properties associated with the one or more objects 108A-N in the technical installation 106AN based on the generated current object trajectories. Optical flow techniques such as Semantic and class-aware optical flow and PWC Net computes the pixel-wise direction and magnitude of movement in the video on three dimensional scenes. The motion of objects 108AN using optical flows can feed into the trajectory prediction component.

The segmentation module 404 is configured for assigning a class label to each multimodal data, for example, each image pixel using semantic and instance segmentation algorithms such as 3D U-Net and DeepLab3+.

The trajectory prediction module 406 is configured for computing possible locations of the one or more objects 108A-N in the technical installation 106A-N with respect to time interval based on the determined one or more multimodal properties associated with the one or more objects 108A-N. The trajectory prediction module 406 is then also configured for computing possible object trajectories between the one or more objects 108A-N in the technical installation 106A-N with respect to the time interval based on the predicted possible locations of the one or more objects 108A-N in the technical installation 106A-N. For example, the trajectory prediction module 406 predicts the future locations of an object 108A-N based on its previous and current locations. This can be achieved using SR-LSTM. Techniques such as Social LSTM can also be used to model interactions between objects 108A-N. Also, major movement patterns and co-occurrence patterns of objects 108A-N in the video are obtained. Future locations of all visible objects 108A-N are predicted based on these extracted patterns.

The future frame prediction module 408 is configured for predicting the one or more multimodal frames associated with the one or more objects 108A-N in the technical installation 106A-N with respect to time interval based on the computed possible object trajectories. The future frame prediction module 408 take as input the current and previous frames of video and predicts the next few frames of video. The future frame prediction module 408 is additionally configured to perform other tasks using similar deep neural network algorithms, such as depth estimation and pose estimation. the future frame prediction module 408 comprises depth estimation module 412 and pose estimation module 414 to achieve such other tasks. The depth estimation module 412 is configured for estimating the depth from monocular and stereo images. The pose estimation module 414 is configured for detecting locations of object keypoint such as hands, legs and head of a person. Furthermore, the future frame prediction module 408 is configure for reconstructing the scene by joining or merging different image sources into a single scene. Furthermore, the future frame prediction module 408 is configured for reidentification, i.e, to associate an object 108A-N in one image with a similar object 108AN in another image. Additionally, the future frame prediction module 408 is configured for multi camera tracking for tracking an object 108A-N across different cameras. Moreover, the future frame prediction module 408 is configured for identification, facial recognition(for e.x., recognize a pre-configured asset or individual based on their appearance and motion).

The future frame prediction module 408 extracts information from available inputs that are further used in the anomaly detection module 308 to derive inferences and make decisions. For example, to identify a plant worker not wearing the required safety equipment that is mandated in a zone or is not complying to the standard operational procedures.

The sound map generation module 410 is configured to generate three-dimensional environment data model for sound data. The audio signal acts as an extra source of information within the technical installation 106A-N. In general, there can be two simple problems to address using audio signal. One is the problem of associating the sound with its source or identification of the source of sound. The other problem is to estimate the distance and direction of origin of the sound in a three dimensional space. A sound map is generated for the technical installation 106A-N. The next step is to semantically associate the sound source with the appropriate objects 108A-N, which is taken care by the sound map generation module 410.

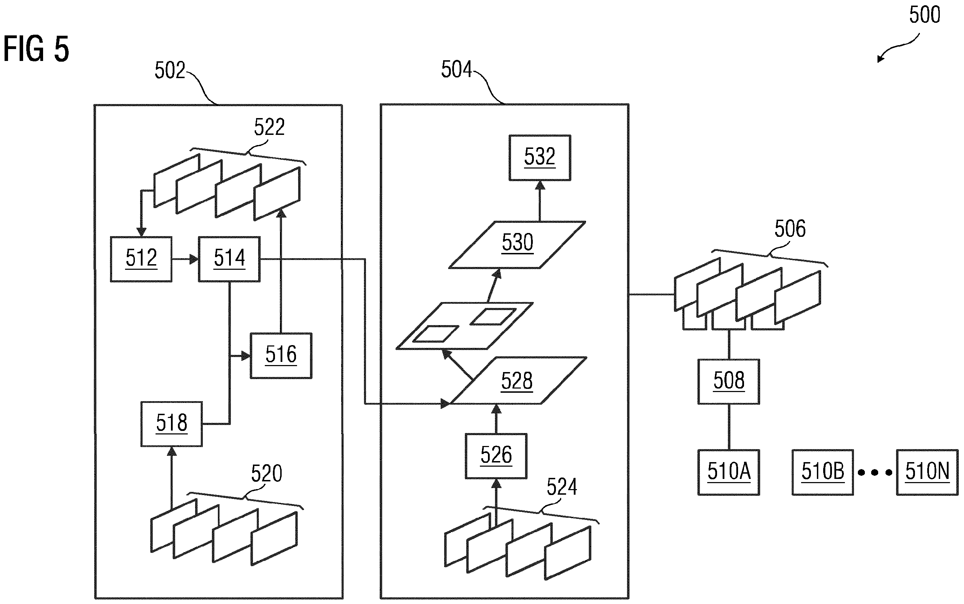

FIG 5 is a detailed view of anomaly management module such as those shown in FIG. 3, according to an embodiment of the present invention. In FIG. 5, an object detection module 502 is configured for obtaining one or more multimodal input raw data associated with one or more objects 108A-N in a technical installation 106AN and detecting the one or more objects 108A-N in real time. The object detection module 502 comprises convolution module 512, 514 and 518, and a error detection module 516. The raw one or more multimodal frames 520, 522 are fed to these convolution modules 512, 514, 518 for object detection and features in the object prediction.

Further, an object tracking module 504 is configured for generating a three-dimensional environment model of the technical installation 106A-N based on the obtained one or more multimodal input raw data associated with the one or more objects 108A-N in the technical installation 106A-N. Techniques for example, but not limited to, tubelet proposal network (TPN) or SAM method are used to detect the one or more objects 108A-N which is then anchored to track the one or more objects 108A-N in the predicted one or more multimodal frame. For example, output of the object detection module 502 is fed to a feature map 528. The feature map 528 is generated based on the video stream 524 obtained from the technical installation 106A-N and based on feature vectors 526. The feature map 528 is then used by the inception module 530 for processing the feature map and generate video frames which is then fed to LSTM networks 532.

Further, a future frame prediction module 506 is configured for predicting one or more multimodal frames associated with the one or more objects 108A-N in the technical installation 106A-N with respect to time interval based on the generated three-dimensional environment model. For example, pixel-based prediction using LSTMS and convolution neural networks are used to predict the one or more multimodal frames. Further, unsupervised methods (such as Social LSTMs or Hierarchical Topic-Gaussian Mixture Model) is used to determine object trajectories. Also, the anomaly detection module 508 is configured for detecting one or more anomalies in the predicted one or more multimodal frames associated with the one or more objects 108A-N in the technical installation 106A-N based on pre-stored machine learning model associated with the one or more objects 108A-N in the technical installation 106A-N. Further, a visualization module 510A-N is configured for generating a three-dimensional predicted environment model of the technical installation 106A-N by superimposing the predicted one or more multimodal frames with the detected one or more anomalies and outputting the generated three-dimensional predicted environment model of the technical installation 106A-N on a user interface.

The visualization module 510A-N is configured for monitoring and reporting anomalies detected. All insights obtained from one or more multimodal are visualized and provided on the monitoring console. Alarms and triggers are provided that are immediately executed, so that feedback is faster than a human response whenever possible (implementation of poka-yoke). For example, a siren can be activated, the machine involved in the unsafe condition shut off, or its operating parameters changed. This system can also be deployed in a "dark factory" where there are no workers to ensure the integrity of the factory itself. A human in the loop allows for active learning of the system especially in case of false positives and low confidence scores.

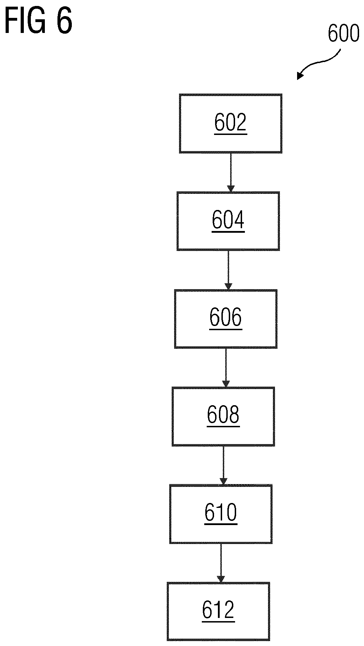

FIG 6 is a process flowchart illustrating an exemplary method of managing environmental safety, according to the embodiment of the present invention. At step 602, one or more multimodal input raw data associated with one or more objects 108A-N in a technical installation 106A-N is obtained from one or more data sources. The one or more multimodal input raw data comprises one or more input multimodal frames. The one or more multimodal input raw data comprises sound data, video data, environmental data and object data and wherein each of the sound data and video data comprises data frames captured by corresponding sensing units.

At step 604, a three-dimensional environment model of the technical installation 106A-N is generated based on the obtained one or more multimodal input raw data associated with the one or more objects 108A-N in the technical installation 106A-N. At step 606, one or more multimodal frames associated with the one or more objects 108A-N in the technical installation 106 with respect to time interval is predicted based on the generated three-dimensional environment model. At step 608, one or more anomalies in the predicted one or more multimodal frames associated with the one or more objects 108A-N in the technical installation 106A-N is detected based on pre-stored machine learning model associated with the one or more objects 108A-N in the technical installation 106. At step 610, a three-dimensional predicted environment model of the technical installation 106A-N is generated by superimposing the predicted one or more multimodal frames with the detected one or more anomalies. At step 612, the generated three-dimensional predicted environment model of the technical installation 106A-N is outputted on a user interface.

The present invention provides an autonomous method and system to identify incidents and near-misses in a technical installation 106A-N and report them to relevant stakeholders in real-time. The method comprises detection of anomalies and non-compliant operating procedures using existing IIoT sensors, sound sensors and CCTV cameras inside factories and construction sites. Futher, the invention is capable of predicting next frames in a scene and derive meaningful insights in terms of the interaction between various objects 108A-N in the frame (anomaly detection with near misses and accidents). Further, the invention uses trained models in a virtual environment of a plant created by three dimensional computer aided drawing (CAD) model, real-time process information and video data for contextualization and anomaly detection. Furthermore, the method automatically estimates severity and criticality of a situation and provide alerts at the monitoring console. The method also uses audio-visual analytics (fusion of video data with sound sensors) for detection of anomalous scenarios with & without visual cues.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference numerals

100- computing environment
102-computing system
104-network
106A-N-technical installation
108A-N-one or more object
110-computing platform
112-anomaly management module
114-server
116-network interface
118-application programming interface
120-database
122A-N-user devices
202-processor
204-memory
206-communication interface
208-network interface
210-input/output unit
212-bus
302-preprocessing module
304-three dimensional environment model generation module
306-a multimodal frame prediction module
308-anomaly detection module
310-database
312-data visualizer module
402- object detection and tracking module
404-segmentation module
406-trajectory prediction module
408-future frame prediction module
410-sound map generation module
412- depth estimation module
414-pose estimation module
502- object detection module
504-object tracking module
506-future frame prediction module
508-anomaly detection module
510A-N -visualization module
512, 514, 518-convolution module
516-error detection module
520, 522-raw one or more multimodal frames
524-video stream
526-feature vectors
528-feature map
530-inception module
532-LSTM networks

## Claims

1. A method for managing environmental safety in a computing environment (100), the method comprising:
obtaining, by a processor (202), one or more multimodal input raw data associated with one or more objects (108A-N) in a technical installation (106A-N) from one or more data sources, wherein the one or more multimodal input raw data comprises one or more input multimodal frames;
generating, by the processor (202), a three-dimensional environment model of the technical installation (106A-N) based on the obtained one or more multimodal input raw data associated with the one or more objects (108A-N) in the technical installation (106A-N);
predicting, by the processor (202), one or more multimodal frames associated with the one or more objects (108A-N) in the technical installation (106A-N) with respect to time interval based on the generated three-dimensional environment model;
detecting, by the processor (202), one or more anomalies in the predicted one or more multimodal frames associated with the one or more objects (108A-N) in the technical installation (106A-N) based on pre-stored machine learning model associated with the one or more objects (108A-N) in the technical installation (106A-N);
generating, by the processor (202), a three-dimensional predicted environment model of the technical installation (106A-N) by superimposing the predicted one or more multimodal frames with the detected one or more anomalies; and
outputting, by the processor (202), the generated three-dimensional predicted environment model of the technical installation (106A-N) on a user interface.

2. The method as claimed in claim 1, wherein generating the three-dimensional environment model of the technical installation (106A-N) based on the obtained one or more multimodal input raw data associated with the one or more objects (108A-N) in the technical installation (106A-N) comprises:
normalizing the one or more multimodal input raw data associated with the one or more objects (108A-N) in the technical installation (106A-N) based on predefined conditions, wherein the normalized one or more multimodal input raw data comprises one or more types of multimodal data;
determining one or more types of multimodal data present in the normalized one or more multimodal input raw data;
merging the one or more types of multimodal data present in the normalized one or more multimodal input raw data using temporal and spatial parameters associated with the normalized one or more multimodal input raw data;
generating the three-dimensional environment model of the technical installation (106A-N) based on the merged one or more types of multimodal data, wherein the three-dimensional environment model comprises a point cloud representation of normalized one or more multimodal input raw data mapped to corresponding one or more types of multimodal data.

3. The method as claimed in claim 2, further comprising:
determining whether the type of multimodal data is a sound data based on the obtained one or more multimodal input raw data associated with the one or more objects (108A-N) in the technical installation (106A-N);
generating a three-dimensional environment model for the sound data if the type of the multimodal data is a sound data;
mapping the generated three-dimensional environment model for the sound data with the one or more objects (108A-N) in the technical installation (106A-N);
merging the mapped three-dimensional environment model for the sound data with the generated three-dimensional environment model of the technical installation (106A-N); and
generating a final three-dimensional environment model for the technical installation (106A-N) based on the merging, wherein the final three-dimensional environment model comprises both the three-dimensional environment model for sound data and the three-dimensional environment model for the technical installation (106A-N).

4. The method as claimed in claim 1, wherein predicting the one or more multimodal frames associated with the one or more objects (108A-N) in the technical installation (106A-N) with respect to time interval based on the generated three-dimensional environment model comprises:
determining current location of one or more objects (108A-N) in the technical installation (106A-N) based on the generated three-dimensional environment model;
generating current object trajectories between the one or more objects (108A-N) in the technical installation (106A-N) based on the determined current location of the one or more objects (108A-N);
determining one or more multimodal properties associated with the one or more objects (108A-N) in the technical installation (106A-N) based on the generated current object trajectories;
computing possible locations of the one or more objects (108AN) in the technical installation (106A-N) with respect to time interval based on the determined one or more multimodal properties associated with the one or more objects (108A-N);
computing possible object trajectories between the one or more objects (108A-N) in the technical installation (106A-N) with respect to the time interval based on the predicted possible locations of the one or more objects (108A-N) in the technical installation (106A-N); and
predicting the one or more multimodal frames associated with the one or more objects (108A-N) in the technical installation (106A-N) with respect to time interval based on the computed possible object trajectories.

5. The method as claimed in claim 1, wherein the one or more multimodal input raw data comprises sound data, video data, environmental data and object data and wherein each of the sound data and video data comprises data frames captured by corresponding sensing units.

6. The method as claimed in claim 1, wherein detecting one or more anomalies in the predicted one or more multimodal frames associated with the one or more objects (108A-N) in the technical installation (106A-N) based on pre-stored machine learning model associated with the one or more objects (108A-N) in the technical installation (106A-N) comprises:
classifying the predicted one or more multimodal frames into one or more segments based on predefined rules;
comparing each of the one or more segments with corresponding one or more pre-stored segments;
computing anomalous score for each of the one or more segments based on results of comparison; and
detecting the one or more anomalies in each of the one or more segments corresponding to the predicted one or more multimodal frames based on the computed anomalous score.

7. The method as claimed in claim 6, further comprising:
performing a root cause analysis on the detected one or more anomalies in each of the one or more segments; and
outputting results of root cause analysis on the user interface, wherein the results of root cause analysis comprises of information on faults or abnormal conditions associated with the one or more objects (108A-N) in the technical installation (106A-N).

8. The method as claimed in claim 1, wherein generating a three-dimensional predicted environment model of the technical installation (106A-N) by superimposing the predicted one or more multimodal frames with the detected one or more anomalies comprises:
generating a visual representation of the predicted one or more multimodal frames;
integrating the detected one or more anomalies in the predicted one or more multimodal frames with the generated visual representation of the predicted one or more multimodal frames to generate integrated visual representation;
retrieving one or more contextual visual indicators associated with the detected one or more anomalies, wherein the one or more contextual visual indicators comprises symbols, color code, shapes indicating criticality of the one or more anomalies;
superimposing the retrieved one or more contextual visual indicators with the integrated visual representation; and
generating a three-dimensional predicted environment model of the technical installation (106A-N), wherein the three-dimensional predicted environment model is a point cloud representation of technical installation (106A-N) comprising the predicted one or more multimodal frames integrated with the detected one or more anomalies and the one or more contextual visual indicators.

9. The method as claimed in claim 1, wherein outputting the generated three-dimensional predicted environment model of the technical installation (106A-N) on the user interface comprises:
displaying the generated three-dimensional predicted environment model of the technical installation (106A-N) on the user interface.

10. The method as claimed in claim 1, wherein outputting the generated three-dimensional predicted environment model of the technical installation (106A-N) on the user interface comprises:
generating one or more notification messages comprising the detected one or more anomalies; and
outputting the generated one or more notification messages on the user interface.

11. A computing system (102) for managing environmental safety in a computing environment (100) comprising:
one or more processor(s) (202); and
a memory (204) coupled to the one or more processor (s) (202), wherein the memory (204) comprises anomaly management module (112) stored in the form of machine-readable instructions executable by the one or more processor (s) (202), wherein the anomaly management module (112) is capable of performing a method according to any of the claims 1-10.

12. A computing environment (100) comprising:
one or more user devices (122A-N);
one or more technical installation (106A-N) comprising one or more objects (108A-N); and
a computing system (102) communicatively coupled to the one or more technical installation (106A-N) and the one or more user devices (122A-N) via a network (104), wherein the computing system (102) comprises anomaly management module (112) capable of performing a method according to any of the claims 1-10.

13. A computer-program product, having machine-readable instructions stored therein, that when executed by a processor(s) (202), cause the processor(s) (202) to perform method steps according to any of the claims 1-10.
